# EUROPÄISCHE PATENTSCHRIFT

(11) **EP 2 707 658 B1**
(45) Veröffentlichungstag und Bekanntmachung des Hinweises auf die Patenterteilung: **09.12.2015**
(21) Anmeldenummer: 12717045.4
(22) Anmeldetag: 26.03.2012
(51) Int. Cl.: F24J 2/14, F24J 2/54, F24J 2/52, F24J 2/00

(54) **SONNENKOLLEKTORMODUL**
SOLAR COLLECTOR MODULE
MODULE CAPTEUR SOLAIRE

(30) Priorität: 10.05.2011 DE 102011101082
(43) Veröffentlichungstag der Anmeldung: 19.03.2014
(73) Patentinhaber: Flabeg Holding GmbH, 93437 Furth im Wald (DE)
(72) Erfinder: NIEMEYER, Rolf, 41517 Grevenbroich (DE)
(74) Vertreter: Walkenhorst, Andreas
(86) Internationale Anmeldenummer: PCT/EP2012/001312
(87) Internationale Veröffentlichungsnummer: WO 2012/152354

(56) Entgegenhaltungen:
- WO-A1-2010/124343
- BE-A3- 1 003 504
- ES-A1- 2 337 332
- US-A- 4 326 773

## Beschreibung

Die Erfindung bezieht sich gemäß Ansprüche 1-6 auf ein Sonnenkollektormodul mit einem zur Anbringung einer Anzahl von in einer Längsrichtung gesehen eine Parabolrinne bildenden Spiegelelementen vorgesehenen Traggerüst, das in Längsrichtung gesehen an seinen beiden Endseiten jeweils eine Kupplungsplatte zur Verbindung mit dem Traggerüst eines benachbarten Moduls aufweist. Sie betrifft weiter gemäß Anspruch 7 ein Parabolrinnenkraftwerk mit einer Mehrzahl von derartigen, in Längsrichtung hintereinander angeordneten Sonnenkollektormodulen.

Dokument WO 2010/124343 A2 offenbart ein Sonnenkollektormodul gemäß dem Oberbegriff des Anspruchs 1.

Im Rahmen von so genannten Parabolrinnenkraftwerken kommen üblicherweise Sonnenkollektormodule mit jeweils einer Mehrzahl von Spiegelelementen zum Einsatz, die in ihrer Gesamtheit zur Bildung eines Parabolspiegels auf einem gemeinsamen Traggerüst angeordnet sind. Die Sonnenkollektormodule sind dabei üblicherweise in Nord-Süd-Richtung ausgerichtet und folgen einachsig der Sonne, wobei die Spiegelelemente aufgrund ihrer Anordnung zur Bildung eines Parabolspiegels die einfallende Sonnenstrahlung auf ein in der Brennlinie verlaufendes Absorberrohr bündeln. Im in der Brennlinie verlaufenden Absorberrohr können somit Temperaturen von bis zu 550 °C erreicht werden. Die dabei in das Absorberrohr eingebrachte Wärme kann über ein Arbeitsmedium abgeführt und über angeschlossene Wärmetauscher beispielsweise in Heißdampf gewandelt werden, der unter Einsatz üblicher Kraftwerkstechnologie angekoppelte Generatoren antreibt. Auf diese Weise bilden derartige Parabolrinnenkraftwerke Solarkraftwerke zur zentralen Stromerzeugung, wobei je nach Auslegung und Positionierung der Anlage Leistungsbereiche von beispielsweise zwischen 10 und 100 MW oder mehr erreichbar sind. Durch Hintereinanderschaltung einer Mehrzahl von Sonnenkollektormodulen der genannten Art können dabei Kollektoren einer Gesamtlänge von beispielsweise bis zu 150 m entstehen.

Für derartige Parabolrinnenkraftwerke ist ein hoher Wirkungsgrad ein allgemein angestrebtes Auslegungsziel. Hierzu ist unter anderem die hochgenaue Ausrichtung der zur Bildung des Parabolspiegels vorgesehenen Spiegelelemente an ihrem Traggerüst und auch der einzelnen Kollektorelemente oder -module zueinander von besonderer Bedeutung. Die Anforderungen an die Genauigkeit der Ausrichtung betreffen dabei insbesondere die Verdrehung der Querachse (konventionell als "x-Achse" bezeichnet) der einzelnen Kollektorelemente um die Drehachse des Kollektors ("y-Achse). Schon Abweichungen von wenigen mrad können nämlich dazu führen, dass eine Vielzahl der vom Reflektor reflektierten Strahlen das Absorberrohr verfehlen und deren Strahlungsenergie nicht genutzt werden kann.

Für die gewünschte hoch genaue Ausrichtung ist üblicherweise neben einer abschließenden Ausrichtung der einzelnen Module im Solarfeld, also unmittelbar am endgültigen Einsatzort, auch in der Fertigungslinie, also während der Vormontage, eine genaue horizontale Ausrichtung der x-Achse des jeweiligen Kollektormoduls und deren Übertragung von einer Montagevorrichtung zur nächsten vorgesehen. Dabei können insbesondere drei wesentliche Montageschritte vorgesehen sein: 1. Montage der so genannten Torque Box als zentrales Tragelement des Traggerüsts; 2. Montage der seitlich auskragenden Tragarme; 3. Montage der Spiegel und der Stützen für die Receiverrohre. In allen drei Montageschritten muss das entstehende Kollektorelement die gleiche Drehachse (y-Achse) als Bezugsachse und auch die gleiche horizontale Ausrichtung der x-Achse aufweisen, damit die auf eine gewisse Fertigungstoleranz ausgelegten Bohrungen genügend Überschneidung aufweisen, um weitere Bauteile in der Soll-Position zu montieren. Zur Übertragung dieser Bezugspunkte werden üblicherweise so genannte Traversen eingesetzt, die entsprechend exakt gefertigte Auflageelemente aufweisen und an beiden Enden eines Kollektorelements drehsteif um die y-Achse angeflanscht werden.

Der Montageablauf sieht dabei üblicherweise vor, dass innerhalb der Montagelinie an jedem Ende des entstehenden Kollektormoduls im Rahmen des ersten Montageschritts (in der Regel die Torque Box) die Traversen angebracht werden, die mittels Präzisionswasserwaagen horizontal ausgerichtet und am Kollektormodul befestigt werden. Die Ausrichtung des Kollektormoduls kann dann über Referenzkörper an der Traverse von einer Montagevorrichtung zur nächsten übertragen werden. Gegen entsprechend exakt gefräste Flächen an den montierten Traversen werden außerdem Referenzblöcke am Tragwerk des Kollektormoduls montiert, um die waagerechte Ausrichtung am Kollektormodul für spätere Zwecke zu definieren. Die Traversen werden am Ende der Montagelinie wieder entfernt. Die Referenzblöcke verbleiben am Kollektormodul und dienen dann im Solarfeld oder am endgültigen Aufstellungsort dazu, die horizontale Ausrichtung des Kollektormoduls erneut einzustellen. Dazu wird vor Ort eine Präzisionswasserwaage auf die Referenzblöcke aufgelegt, mittels derer das Kollektormodul in die korrekte horizontale Ausrichtung gedreht werden kann.

Da die Parabolrinnenkraftwerke in der Regel eine Mehrzahl derartiger Kollektormodule umfassen, müssen diese bei der Montage geeignet miteinander verkoppelt und auch zueinander ausgerichtet werden. Die dazu vorgesehenen Kupplungselemente an den Stoßstellen zwischen den einzelnen Kollektorelementen sind in der Regel orthogonal zur Kollektorachse (y-Achse, Längsachse) angebrachte Kupplungsplatten, die mittels Verbindungsbolzen flächig gegeneinander gespannt werden. Der Reibschluss zwischen den Plattenoberflächen sorgt dann für eine Kräfte- und Momentenübertragung von einem zum anderen Sonnenkollektormodul. Üblich ist es, dass bei der Montage und Verkopplung benachbarter Module zunächst die Drehachsen der Kollektormodule mit Hilfe eines zentrischen Bolzens zur Deckung gebracht werden.

Mittels einer Präzisionswasserwaage, die auf die Referenzblöcke aufgelegt wird, wird dabei zunächst eines der Kollektormodule korrekt ausgerichtet und am in Zenitstellung positionierten Antriebspylon des Parabolrinnenkraftwerks fixiert. Das nächste Sonnenkollektormodul wird dann gegen das bereits ausgerichtete bewegt, so dass die Endplatten gegeneinander liegen. Anschließend werden die Drehachsen durch Abstecken mit einem Zentrierbolzen zur Deckung gebracht. Der noch übrige Freiheitsgrad in Richtung der Verdrehung um die Drehachse wird dann ebenfalls mit Hilfe einer Präzisionswasserwaage waagerecht ausgerichtet und mittels Anziehen der Verbindungsbolzen am bereits ausgerichteten Kollektormodul fixiert. Dieser Vorgang wird entsprechend der Anzahl der Kollektormodule im jeweiligen Parabolrinnenkollektor wiederholt.

Der Erfindung liegt die Aufgabe zugrunde, ein Sonnenkollektormodul der oben genannten Art anzugeben, mit dem eine hochgenaue Ausrichtung bei besonders einfach gehaltener Montage ermöglicht ist. Des Weiteren soll ein auf besonders einfache Weise und dennoch hochgenau montierbarer Parabolrinnenkollektor angegeben werden.

Bezüglich des Sonnenkollektors wird diese Aufgabe erfindungsgemäß gelöst, indem die in Längsrichtung gesehen endseitig am Traggerüst angeordneten Kupplungsplatten jeweils mit einer Anzahl von Justierelementen versehen sind, wobei die Kupplungsplatten hinsichtlich ihrer Justierelemente derart paarweise ausgeführt sind, dass die Justierelemente der ersten Kupplungsplatte jeweils eine Referenz-Auflagefläche für eine Kontaktfläche eines Justierelements der zweiten Kupplungsplatte aufweisen.

Die Erfindung geht dabei von der Überlegung aus, dass eine Vereinfachung der Montagevorgänge insbesondere dadurch erreicht werden könnten, dass Ausrichtungs- und Positioniervorgänge konsequent aus der Phase der Vorort-Montage eliminiert und in die Vormontage oder Vorfertigung hinein verlagert werden. Insbesondere sollte dazu die Ausrichtprozedur im Solarfeld, also am Einsatzort, mittels Präzisionswasserwaage und Referenzblöcken durch geeignete Justierschritte während der Vormontage ersetzt werden. Dazu sollten bereits in der Montagelinie an beiden Enden des Kollektormoduls geeignete Justiermittel an den End- oder Kupplungsplatten montiert werden. Diese Justierelemente dienen dann im Feld oder vor Ort als Kupplungs- und Richtelemente und sind jeweils so angebracht, dass die Justierelemente am vorderen Ende eines Kollektormoduls mit ihrer Auflagefläche auf den Referenz-Auflageflächen der korrespondierenden Justierelemente am hinteren Ende des benachbarten Kollektorelements zum Liegen kommen. Durch geeignete, hochpräzise Ausrichtung der Justierelemente bereits während der Vormontage kann damit eine hochpräzise Ausrichtung vor Ort zwischen benachbarten Modulen durch simples Aufeinanderlegen der miteinander korrespondierenden Justierelemente erreicht werden.

Um eine möglichst geringe Auswirkung möglicher Fertigungs- oder Positionierungenauigkeiten der Justierelemente auf die Winkelausrichtung zu erreichen, sind vorteilhafterweise an den Kupplungsplatten jeweils zwei Justierelemente in Draufsicht auf die jeweilige Kupplungsplatte gesehen symmetrisch zu deren Mittelachse und damit insbesondere klappsymmetrisch zur y-z-Ebene des Parabolrinnenkollektors im endseitigen Außenbereich der jeweiligen Kupplungsplatte angeordnet. Insbesondere durch die Anordnung der Justierelemente besonders weit außen, also besonders weit von der Mittelachse entfernt, kann dabei die Auswirkung von Fertigungs- oder Positionierungenauigkeiten bei den Justierelementen auf die rotatorische Orientierung des Spiegel-Tragsystems um die y-Achse besonders gering gehalten werden.

Eine besonders hohe Montagefreundlichkeit für das System ist erreichbar, indem die von den Justierelementen gebildeten Referenz-Auflageflächen im Querschnitt gesehen parallel zur x-Achse des Kollektors liegen, wobei in besonders bevorzugter Weiterbildung die Referenz-Auflageflächen parallel zur Basalebene der von den Spiegelelementen gebildeten Parabolrinne, also parallel zur x-y-Ebene des Systems, ausgerichtet sind. Unter Vermeidung einer mechanischen Überbestimmung des Systems können dadurch leichte Toleranzen in x-y-Richtung in Kauf genommen werden. Bei der Montage im Feld, also beim Zusammenfügen benachbarter Module, wird vorzugsweise die y-Achse durch Einbringen eines Zentrierbolzens in die jeweilige Kupplungsplatte festgelegt. Die Passungen können dabei jedoch als deutliche Spielpassungen ausgelegt sein, um zwischen den beiden Auflageblöcken und dem Zentrierbolzen keine Überbestimmung zu erzeugen. Für den optischen Wirkungsgrad des Kollektors ist nämlich im Wesentlichen entscheidend, wie exakt die x-Achse ausgerichtet ist. Ein leichter Versatz der y-Achse auf Grund des Spiels am Zentrierbolzen hat vernachlässigbar kleine Auswirkungen auf die optische Qualität des Kollektors, und die hochgenaue Ausrichtung in x-Richtung.

Eine noch weitere Erleichterung der Montage ist erreichbar, indem das System für gewisse geringfügige Toleranzen auch hinsichtlich Verdrehungen um die y-Achse ertüchtigt wird. Um dies zu ermöglichen, weisen die von den Justierelementen der ersten Kupplungsplatte gebildeten Referenz-Auflageflächen eine geringere seitliche Ausdehnung auf als die jeweils zugeordnete Kontaktfläche des Justierelements der zweiten Kupplungsplatte. Bei der durch die Montage entstehenden Paarung der Referenz-Auflagefläche der ersten Kupplungsplatte des ersten Moduls mit der Kontaktfläche der zweiten Kupplungsplatte des benachbarten Moduls kommen somit Kontaktflächen unterschiedlicher Breite in x-Richtung aufeinander zum Liegen. Die vergleichsweise geringere Breite der (unten liegenden) Referenz-Auflagefläche ermöglicht dabei in geringem Umfang auch leichte Verkippungen beim Auflegen der zweiten Auflagefläche.

Bei der Montage am Einsatzort, also im Solarfeld, wird die Verbindung benachbarter Sonnenkollektormodule untereinander vorzugsweise mit Bolzen über ein geeignetes Lochbild, insbesondere über eine gewisse Feinjustierung der rotatorischen Ausrichtung der Module zueinander erlaubende Langlöcher in den Kupplungsplatten, hergestellt. Um dabei und beim Einhängen der Sonnenkollektormodule im Solarfeld im Bedarfsfall die Möglichkeit einer Nachjustage zu haben, weisen in vorteilhafter Ausgestaltung eine Anzahl der Justierelemente jeweils einen in einem Gewindekanal geführten Justierstift auf. Zur Bildung der Gewindekanäle sind in den vorzugsweise als Auflageblöcke ausgeführten Justierelementen der ersten Kupplungsplatte Durchgangsgewindebohrungen eingebracht, die zur Aufnahme eines Gewindebolzens als Justierstift dienen. Dadurch ist es möglich, einen kleinen Abstand zwischen den Auflageblöcken der beiden miteinander zu verbindenden Kupplungsplatten herzustellen und damit das jeweilige Sonnenkollektormodul im Bedarfsfall geringfügig um die y-Achse zu neigen.

In besonders vorteilhafter Ausgestaltung sind die Justierelemente jeweils als an die jeweilige Kupplungsplatte anmontierte Auflageblöcke ausgeführt.

Bezüglich des Parabolrinnenkollektors mit einer Mehrzahl von in Längsrichtung hintereinander angeordneten Sonnenkollektormodulen der genannten Art wird die genannte Aufgabe gelöst, indem benachbarte Sonnenkollektormodule über ihre einander jeweils zugewandten Kupplungsplatten miteinander verbunden sind. Bei der Montage wird dabei vorzugsweise zunächst ein (später mittig stehender) Antriebspylon errichtet, der beidseitig mit Kupplungsplatten des ersten Typs, also versehen mit Justierelementen mit Referenz-Auflageflächen, ausgerüstet ist. Spiegelsymmetrisch werden sodann auf beiden Seiten des Antriebspylons Sonnenkollektormodule jeweils mit einer Kupplungsplatte des zweiten Typs, also versehen mit Justierelementen mit den Referenz-Auflageflächen jeweils zugeordneten Kontaktflächen, eingehängt. Bei der Montage werden dabei die Kontaktflächen (der neu zu montierenden Module) auf die Referenz-Auflageflächen (der bereits montierten ersten Kupplungsplatten) aufgelegt, wodurch auch eine hochgenaue Feinausrichtung der Module infolge des flächigen Kontakts der Justierelemente erfolgt. Anschließend werden beidseitig an den "noch freien" Enden der neu montierten Module jeweils weitere Module unter Nutzung der Kupplungsplatten montiert, so lange, bis die gewünschte Länge oder Anzahl der Module des Parabolrinnenkollektors erreicht ist. Die Verbindung der Module untereinander wird, wie beschrieben, über ein geeignetes Lochbild mit Hilfe von Bolzen hergestellt.

Die mit der Erfindung erzielten Vorteile bestehen insbesondere darin, dass durch die Verwendung paarweise ausgelegter Kupplungsplatten in der Art von "Stecker-Muffe"- oder "Männlich-Weiblich"-Kombinationen mit entsprechend ausgestalteten Justierelementen auf besonders einfache und montagefreundliche Weise eine Übertragung einer in einer Vormontage hergestellten hochgenauen Ausrichtung und Orientierung benachbarter Module untereinander bei der Installation und Endmontage am Einsatzort reproduziert werden kann, ohne dass eine aufwendige Feinjustierung vor Ort erforderlich ist. Damit ist eine wesentliche Vereinfachung der Feldmontage erreichbar, da keine Justage im Feld notwendig ist. Damit geht zudem auch eine Erhöhung der Arbeitssicherheit im Solarfeld einher, da weniger Handling-Schritte mit schweren Lasten erforderlich sind. Aufwendige Justierwerkzeuge wie beispielsweise Wasserwaagen-Tools werden nur in der Montagelinie benötigt, wohingegen bei der Feldmontage lediglich noch eine Endkontrolle der Justierung im Sinne einer Qualitätsüberprüfung vorgesehen ist. Die eigentliche Ausrichtung und Justierung findet hingegen in der Montagelinie statt, so dass eine geringere Fehlerwahrscheinlichkeit auf Grund geringerer Störeinflüsse durch Umwelt (Wind, Hitze etc.) zu erwarten ist. Die immer gleiche Abformung von exakt eingemessenen Montagevorrichtungen und mit Hilfe hochgenauer Traversen sorgt für gleichbleibende Ausrichtqualität.

Ein Ausführungsbeispiel der Erfindung wird anhand einer Zeichnung näher erläutert. Darin zeigen:
- FIG. 1: einen Parabolrinnenkollektor mit einer Anzahl von Sonnenkollektormodulen,
- FIG. 2: den Parabolrinnenkollektor nach FIG. 1 im Querschnitt,
- FIG. 3, 4: schematisch jeweils eine Kupplungsplatte eines Sonnenkollektormoduls des Parabolrinnenkollektors nach FIG. 1,
- FIG. 5: die Kupplungsplatten gem. FIG. 3 und 4 übereinandergelegt,
- FIG. 6: Justierelemente der Kupplungsplatten gem. FIG. 3, 4,
- FIG. 7: die übereinanderliegenden Kupplungsplatten gem. FIG. 5 in seitlicher Ansicht,
- FIG. 8: ein Justierelement in einer Ansicht seitlich von unten, und
- FIG. 9: den Parabolrinnenkollektor gem. FIG. 1 schematisch im Längsschnitt.

Gleiche Teile sind in allen Figuren mit denselben Bezugszeichen versehen.

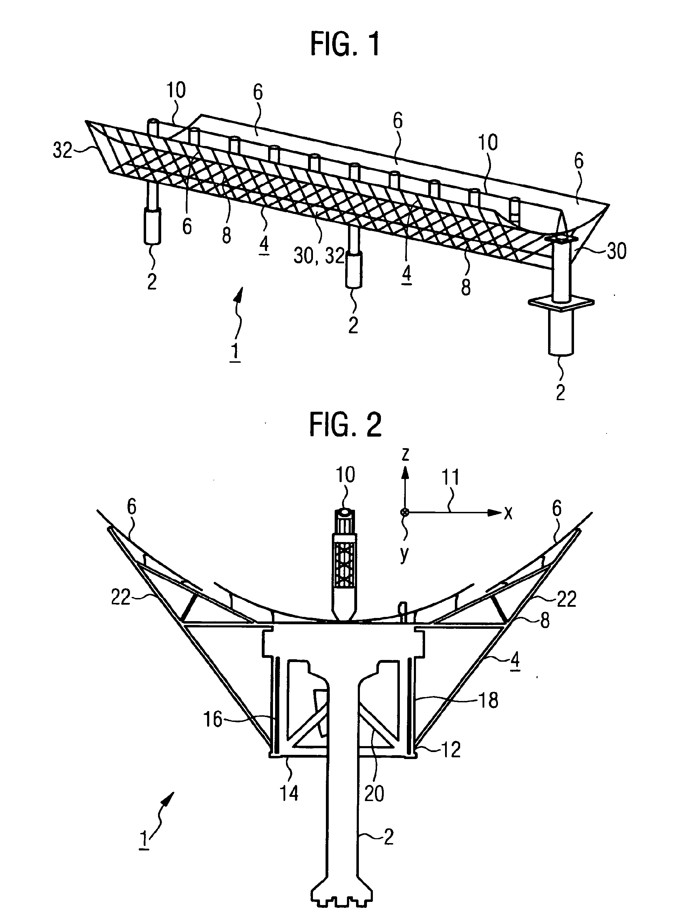

Der Parabolrinnenkollektor 1 gemäß FIG. 1 ist zum Einsatz in einem so genannten Parabolrinnenkraftwerk vorgesehen. Er umfasst eine Mehrzahl von benachbart zueinander angeordneten, von Pylonen 2 (Antriebs- oder Stützpylonen) getragenen Sonnenkollektormodulen 4. Jedes Sonnenkollektormodul 4 umfasst jeweils eine Anzahl von Spiegelelementen 6, die in ihrer Gesamtheit in jedem Sonnenkollektormodul 4 einen Parabolspiegel bilden und dazu auf einem Traggerüst 8 angeordnet sind. In der Gesamtheit des Parabolrinnenkollektors 1 gesehen bilden die Parabolspiegel der Sonnenkollektormodule 4 dabei eine Parabolrinne. Der Parabolrinnenkollektor 1 ist dabei für eine Installation mit seiner Längsachse in Nord-Süd-Richtung ausgelegt, wobei das Traggerüst 8 derart schwenkbar gelagert ist, dass der durch die Spiegelelemente 6 gebildete Parabolspiegel einachsig der Sonne folgen kann. Der durch die Spiegelelemente 6 gebildete Parabolspiegel bündelt dabei die einfallende Sonnenstrahlung auf seine Brennlinie, in der ein Absorberrohr 10 angeordnet ist. Das Absorberrohr 10 wird durch ein geeignetes Wärmemedium durchströmt und ist in nicht näher dargestellter Weise mit nachfolgenden Kraftwerkskomponenten verbunden, in denen eine Umwandlung der über die Sonneneinstrahlung eingebrachten Wärme in andere Energieformen erfolgt.

Das Traggerüst 8 ist im Ausführungsbeispiel nach FIG. 1 in Form einer so genannten Torsionsbox ausgebildet. Diese Torsionsbox ist in FIG. 2 im Detail gezeigt. Zusätzlich ist zur Erläuterung der gängigerweise verwendeten Koordinaten in FIG. 2 ein Koordinatensystem 11 mit den wesentlichen Hauptrichtungen dargestellt. Wie dem (bei einem Verschwenken des Sonnenkollektormoduls 4 um seine parallel zum Absorberrohr 10 verlaufende Schwenkachse mit dem Sonnenkollektormodul 4 mitschwenkende) Koordinatensystem 11 entnehmbar ist, verläuft die x-Richtung entlang der Basalebene der von den Spiegelelementen 6 gebildeten Parabolrinne. Die z-Richtung steht hingegen orthogonal zu dieser Basalebene, so dass die von den Spiegelelementen 6 jeweils im Querschnitt gebildeten Parabeln in der x-z-Ebene verlaufen. Die y-Richtung verläuft hingegen parallel zur Schwenkachse der Sonnenkollektormodule 4 und somit auch parallel zum Absorberrohr 10, weist also in der Querschnittsdarstellung gem. FIG. 2 aus der Zeichenebene heraus.

Die Torsionsbox umfasst, wie der Darstellung in FIG. 2 entnehmbar ist, eine Hauptträgerstruktur 12, die über zwei parallel angeordnete Gitterelemente 14, 16 mit einer rechteckigen Fachwerkstruktur verfügt. Die Gitterelemente 14, 16 sind über Umfassungsstreben 18 außen und Querstreben 20 innen miteinander verbunden und bilden so eine Box-Struktur mit rechteckiger oder sogar quadratischer Querschnittsfläche. An dieser Hauptträgerstruktur 12 sind auskragend eine Vielzahl von Tragarmen 22, so genannte Cantilever, angeordnet, die die Spiegelelemente 6 stützen.

Die Torsionsbox der Sonnenkollektormodule 4 ist im Ausführungsbeispiel derart ausgebildet, dass sich der Schwerpunkt des Gesamtsystems, d. h. der Spiegelelemente 6 und der zugehörigen Torsionsbox, außerhalb der Parabelbahn der Spiegelelemente 6 befindet. Mit "außerhalb der Parabelbahn" ist dabei derjenige Bereich gemeint, in dem auch die Torsionsbox selbst liegt, also die vom Absorberrohr 10 abgewandte Seite des jeweiligen Spiegelelements 6. Eine derartige Verschiebung des Schwerpunktes außerhalb der Parabelbahn wird dabei durch geeignete Materialwahl und geeignete Anordnung der tragenden Elemente der Torsionsbox erreicht. Es kann also insbesondere gezielt auf die Verwendung von Gegengewichten oder zusätzlichen Elementen ohne Beitrag zur strukturellen Festigkeit des Trägersystems verzichtet werden. Ein derartiger Verzicht führt bei der vorliegenden Torsionsbox somit in vorteilhafter Ausgestaltung zu einer besonders einfachen und kompakten Bauweise.

Die Sonnenkollektormodule 4 und damit auch der Parabolrinnenkollektor 1 insgesamt sind gezielt dafür ausgelegt, dass eine hochgenaue Ausrichtung bei besonders einfach gehaltener Montage vor Ort, also am unmittelbaren Einsatzort, ermöglicht ist. Dabei sollen insbesondere Positionierungsfehler durch Ungenauigkeiten beim Verschwenken der Sonnenkollektormodule 4 weitgehend eliminiert oder zumindest besonders gering gehalten werden. Um dies bei dennoch einfach gehaltener Vor-Ort-Montage zu ermöglichen, sind die Sonnenkollektormodule 4 für eine weitgehende, hochgenaue Ausrichtung und Justierung bereits während der Vormontage, beispielsweise in einer Fertigungshalle, und ein anschließendes einfach und sicher gehaltenes Übertragen der voreingestellten Ausrichtung bei der Endmontage im Solarfeld ausgelegt.

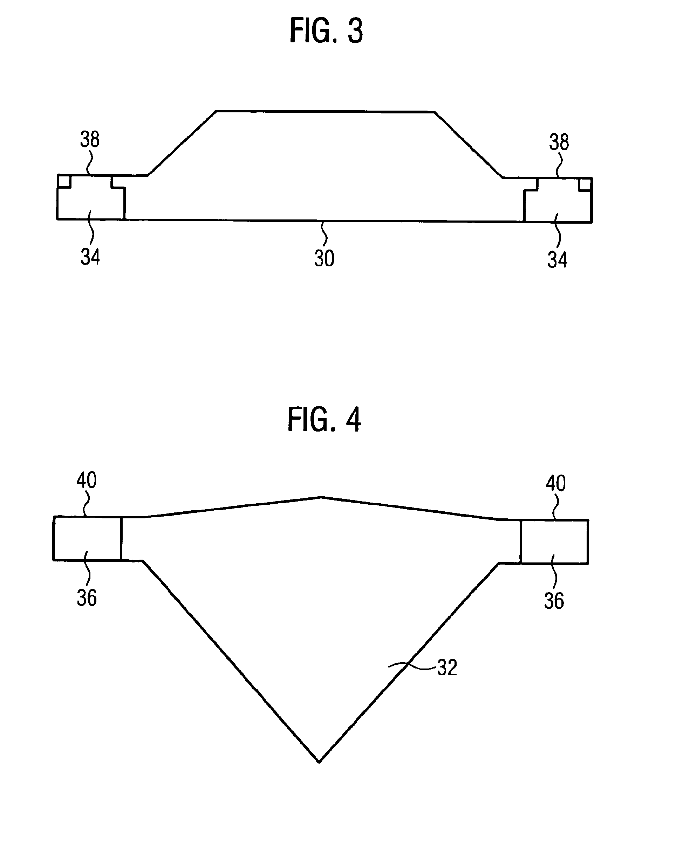

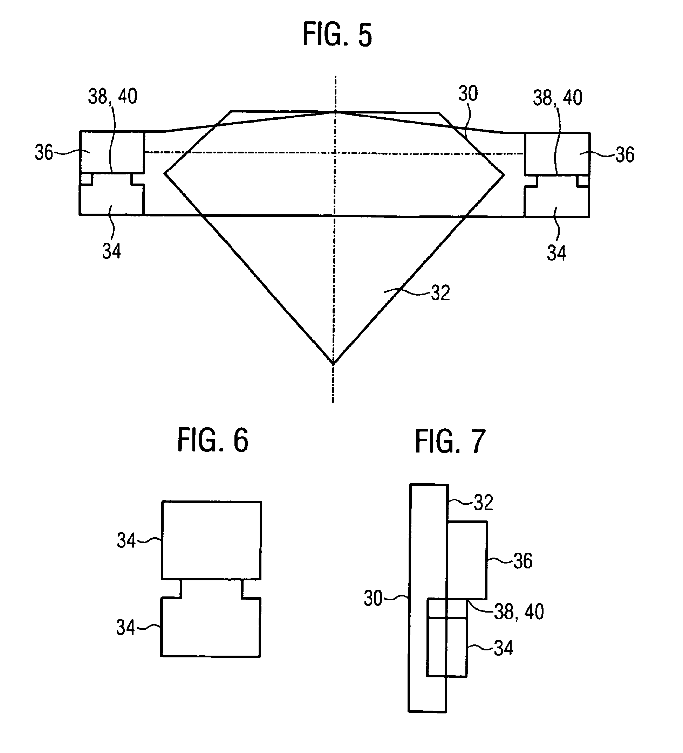

Zur Erreichung der genannten Auslegungsziele sind die Traggerüste 8 der Sonnenkollektormodule 4 in Längsrichtung der Parabolrinne gesehen jeweils an ihren beiden Endseiten mit zur Verbindung mit dem jeweils benachbarten Modul vorgesehenen Kupplungsplatten 30, 32 versehen. Die Kupplungsplatten 30, 32 sind in der Art einer Stecker-Muffe- oder "männlich-weiblich"-Konstellation für eine paarweise Verwendung miteinander unter weitgehendem Erhalt der Ausrichtung relativ zueinander nach erfolgter Vormontage ausgeführt. Dabei umfasst jedes Traggerüst 8 einerseits jeweils eine mit einer Anzahl von Justierelementen 34 versehene, beispielsweise in Vorderansicht in FIG. 4 gezeigte erste Kupplungsplatte 30 und andererseits jeweils eine mit einer Anzahl von Justierelementen 36 versehene, beispielsweise in Vorderansicht in FIG. 5 gezeigte zweite Kupplungsplatte 32. Die Justierelemente 34, 36 sind dabei als Auflageblöcke ausgeführt und geeignet an der jeweiligen Kupplungsplatte 30, 32 befestigt, beispielsweise mittels Schließringbolzen oder auch angeschweißt. Hinsichtlich ihrer Justierelemente 34, 36 sind die Kupplungsplatten 30, 32 derart paarweise ausgeführt, dass die Justierelemente 34 der jeweils ersten Kupplungsplatte 30 eine Referenz-Auflagefläche 38 für eine Kontaktfläche 40 eines Justierelements 36 der zweiten Kupplungsplatte 32 bilden.

Im Ausführungsbeispiel gemäß den FIG. 3, 4 sind an den Kupplungsplatten 30, 32 jeweils zwei Justierelemente 34 bzw. 36 in Draufsicht auf die jeweilige Kupplungsplatte 30, 32 gesehen symmetrisch zu deren Mittelachse im endseitigen Außenbereich angeordnet.

Zwei Kupplungsplatten 30, 32 übereinanderliegend, also im montierten Zustand bei der Verbindung zweier benachbarter Sonnenkollektormodule 4, sind in FIG. 5 in Draufsicht und in FIG. 7 seitlich im Querschnitt gezeigt. In dieser Darstellung ist einerseits deutlich erkennbar, dass die Kontaktflächen 40 der Justierelemente 36 auf den Referenz-Auflageflächen 38 der Justierelemente 34 aufliegen. Damit ist eine in der Vormontage in einer Werkshalle oder dergleichen vorgenommene hochgenaue Ausrichtung der entsprechenden Sonnenkollektormodule 4 relativ zueinander auf besonders einfache und zuverlässige Weise bei einer späteren Feld- oder Vor-Ort-Montage reproduzierbar, ohne dass eine erneute Justage erforderlich wäre. Andererseits ist aus der Darstellung in FIG. 5 und auch aus der noch vergrößerten Darstellung in FIG. 6 gut erkennbar, dass die von den Justierelementen 34 der ersten Kupplungsplatte 30 gebildeten Referenz-Auflageflächen 38 eine geringere seitliche Ausdehnung aufweisen als die jeweils zugeordnete Kontaktfläche 40 des Justierelements 36 der zweiten Kupplungsplatte 32.

Um dabei und beim Einhängen der Sonnenkollektormodule 4 im Solarfeld im Bedarfsfall die Möglichkeit einer Nachjustage zu haben, sind zumindest einige der Justierelemente 34, 36 jeweils mit einem Gewindekanal 42 versehen, in denen ein nicht näher dargestellter Justierstift oder Gewindebolzen geführt ist. Zur Bildung der Gewindekanäle 42 sind beispielsweise in den als Auflageblöcke ausgeführten Justierelementen 34 der ersten Kupplungsplatten 30 Durchgangsgewindebohrungen eingebracht, die zur Aufnahme eines Gewindebolzens als Justierstift dienen. Dadurch ist es möglich, einen kleinen Abstand zwischen den Auflageblöcken der beiden miteinander zu verbindenden Kupplungsplatten 30, 32 herzustellen und damit das jeweilige Sonnenkollektormodul 4 im Bedarfsfall geringfügig um die y-Achse zu neigen.

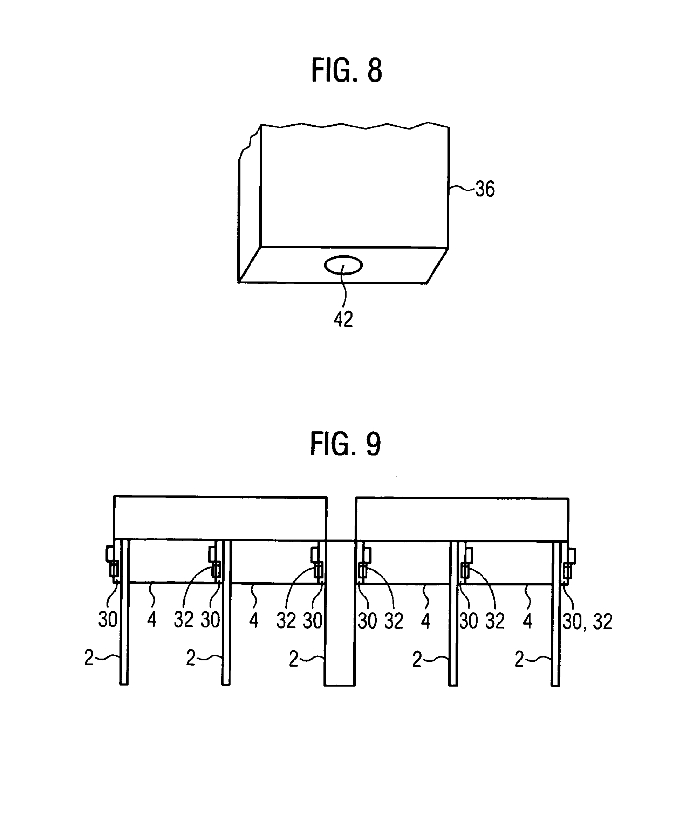

Der Parabolrinnenkollektor 1 mit einer Mehrzahl von in Längsrichtung hintereinander angeordneten Sonnenkollektormodulen 4 der genannten Art ist schematisch im Längsschnitt in FIG. 9 gezeigt. Benachbarte Sonnenkollektormodule 4 sind dabei über ihre einander jeweils zugewandten Kupplungsplatten 30, 32 miteinander verbunden. Bei der Montage wird dabei vorzugsweise zunächst ein (später mittig stehender und in FIG. 9 als mittlerer Pylon 2 gezeigter) Antriebspylon errichtet, der beidseitig mit Kupplungsplatten 30 des ersten Typs, also versehen mit Justierelementen 34 mit Referenz-Auflageflächen 38, ausgerüstet ist. Spiegelsymmetrisch werden sodann auf beiden Seiten des Antriebspylons Sonnenkollektormodule 4 jeweils mit einer Kupplungsplatte 32 des zweiten Typs, also versehen mit Justierelementen 32 mit den Referenz-Auflageflächen 38 jeweils zugeordneten Kontaktflächen 40, eingehängt. Bei der Montage werden dabei die Kontaktflächen 40 der neu zu montierenden Module auf die Referenz-Auflageflächen 38 der bereits montierten ersten Kupplungsplatten 30 aufgelegt, wodurch auch eine hochgenaue Feinausrichtung der Module infolge des flächigen Kontakts der Justierelemente 34, 36 miteinander erfolgt. Anschließend werden beidseitig an den "noch freien" Enden der neu montierten Module jeweils weitere Module unter Nutzung der Kupplungsplatten 30, 32 montiert, so lange, bis die gewünschte Länge oder Anzahl der Module des Parabolrinnenkollektors 1 erreicht ist.

### Bezugszeichenliste

- 1: Parabolrinnenkollektor
- 2: Pylon
- 4: Sonnenkollektormodul
- 6: Spiegelelement
- 8: Traggerüst
- 10: Absorberrohr
- 11: Koordinatensystem
- 12: Hauptträgerstruktur
- 14, 16: Gitterelement
- 18: Umfassungsstrebe
- 20: Querstrebe
- 22: Tragarm
- 30, 32: Kupplungsplatte
- 34, 36: Justierelement
- 38: Referenz-Auflagefläche
- 40: Kontaktfläche
- 42: Gewindekanal

## Patentansprüche

1. Sonnenkollektormodul (4) mit einem zur Anbringung einer Anzahl von in einer Längsrichtung gesehen eine Parabolrinne bildenden Spiegelelementen (6) vorgesehenen Traggerüst (8), **dadurch gekennzeichnet, daß** das in Längsrichtung gesehen an seinen beiden Endseiten jeweils eine mit einer Anzahl von Justierelementen (34, 36) versehene Kupplungsplatte (30, 32) zur Verbindung mit dem Traggerüst (8) eines benachbarten Moduls aufweist, wobei die Kupplungsplatten (30, 32) hinsichtlich ihrer Justierelemente (34, 36) derart paarweise ausgeführt sind, dass die Justierelemente (34) der ersten Kupplungsplatte (30) jeweils eine Referenz-Auflagefläche (38) für eine Kontaktfläche (40) eines Justierelements (36) der zweiten Kupplungsplatte (32) aufweisen.

2. Sonnenkollektormodul (4) nach Anspruch 1, an deren Kupplungsplatten (30, 32) jeweils zwei Justierelemente (34 bzw. 36) in Draufsicht auf die jeweilige Kupplungsplatte (30, 32) gesehen symmetrisch zu deren Mittelachse im endseitigen Außenbereich angeordnet sind.

3. Sonnenkollektormodul (4) nach Anspruch 1 oder 2, bei dem die von den Justierelementen (34) der ersten Kupplungsplatte (30) gebildeten Referenz-Auflageflächen (38) parallel zur Basalebene der von den Spiegelelementen (6) gebildeten Parabolrinne ausgerichtet sind.

4. Sonnenkollektormodul (4) nach Anspruch 3, bei dem die von den Justierelementen (34) der ersten Kupplungsplatte (30) gebildeten Referenz-Auflageflächen (38) eine geringere seitliche Ausdehnung aufweisen als die jeweils zugeordnete Kontaktfläche (40) des Justierelements (36) der zweiten Kupplungsplatte (32).

5. Sonnenkollektormodul (4) nach einem der Ansprüche 1 bis 4, bei dem eine Anzahl der Justierelemente (34, 36) jeweils einen in einem Gewindekanal geführten Justierstift aufweisen.

6. Sonnenkollektormodul (4) nach einem der Ansprüche 1 bis 5, bei dem die Justierelemente (34, 36) jeweils als an die jeweilige Kupplungsplatte (30, 32) anmontierte Auflageblöcke ausgeführt sind.

7. Parabolrinnenkollektor (1) mit einer Mehrzahl von in Längsrichtung hintereinander angeordneten Sonnenkollektormodulen (4) nach einem der Ansprüche 1 bis 6, bei dem benachbarte Sonnenkollektormodule (4) über ihre einander jeweils zugewandten Kupplungsplatten (30, 32) miteinander verbunden sind.

## Claims

1. A solar collector module (4) having a support frame (8) provided for attachment of a number of reflector elements (6) forming a parabolic trough, viewed in a longitudinal direction, **characterized in that** said support frame (8) has on each of its end faces, viewed in the longitudinal direction, a coupling plate (30, 32) provided with a number of adjusting elements (34, 36), for connection to the support frame (8) of a neighbouring module, the coupling plates (30, 32) being designed in pairs with regard to their adjusting elements (34, 36) in such a way that the adjusting elements (34) of the first coupling plate (30) each have a reference bearing surface (38) for a contact surface (40) of an adjusting element (36) of the second coupling plate (32).

2. The solar collector module (4) of claim 1, on each coupling plate (30, 32) of which two adjusting elements (34 and 36, respectively), viewed from top onto the respective coupling plate (30, 32), are arranged symmetrically to the latter's center line in the end-side outer region.

3. The solar collector module (4) of claim 1 or 2, wherein the reference bearing surfaces (38) formed by the adjusting elements (34) of the first coupling plate (30) extend in parallel to the basal plane of the parabolic trough formed by the reflector elements (6).

4. The solar collector module (4) of claim 3, wherein the reference bearing surfaces (38) formed by the adjusting elements (34) of the first coupling plate (30) have a smaller lateral extension than the respective associated contact surface (40) of the adjusting element (36) of the second coupling plate (32).

5. The solar collector module (4) of any of claims 1 to 4, wherein each of a number of the adjusting elements (34, 36) includes an adjusting pin which is mounted in a threaded channel.

6. The solar collector module (4) of any of claims 1 to 5, wherein each of the adjusting elements (34, 36) is designed as a bearing block mounted to the respective coupling plate (30, 32).

7. A parabolic trough collector (1) having a plurality of solar collector modules (4) of any of claims 1 to 6, arranged one behind the other in the longitudinal direction, wherein adjacent solar collector modules (4) are connected with each other via their coupling plates (30, 32) which in each case face towards each other.

## Revendications

1. Module capteur solaire (4) ayant une ossature support (8) servant à monter un certain nombre d'éléments réfléchissants (6) formant une auge parabolique, vus dans le sens longitudinal, **caractérisé en ce que** ladite ossature support (8) présente, vue dans le sens longitudinal, à ses deux extrémités à chaque fois une plaque d'accouplement (30, 32) munie d'un certain nombre d'éléments d'ajustage (34, 36) pour être reliée à l'ossature support (8) d'un module adjacent, les plaques d'accouplement (30, 32) étant conçues, quant à leurs éléments d'ajustage, par paires, de sorte que chacun des éléments d'ajustage (34) de la première plaque d'accouplement (30) présente une surface d'appui de référence (38) pour une surface de contact (40) d'un élément d'ajustage (36) de la deuxième plaque d'accouplement (32).

2. Module capteur solaire (4) selon la revendication 1, sur chaque plaque d'accouplement (30, 32) duquel sont disposés deux éléments d'ajustage (34 et 36, respectivement), vus d'en haut vers la plaque d'accouplement (30, 32), symétriquement par rapport à la ligne centrale de cette dernière dans la zone extérieure du côté terminal.

3. Module capteur solaire (4) selon la revendication 1 ou 2, dans lequel les surfaces d'appui de référence (38) formées par les the éléments d'ajustage (34) de la première plaque d'accouplement (30) s'étendent en parallèle au plan basal de l'auge parabolique formée par les éléments réfléchissants (6).

4. Module capteur solaire (4) selon la revendication 3, dans lequel les surfaces d'appui de référence (38) formées par les éléments d'ajustage (34) de la première plaque d'accouplement (30) ont une étendue latérale plus petite que la surface de contact (40) y associée respective de l'élément d'ajustage (36) de la deuxième plaque d'accouplement (32).

5. Module capteur solaire (4) selon l'une quelconque des revendications 1 à 4, dans lequel chacun d'un certain nombre des éléments d'ajustage (34, 36) comprend une goupille d'ajustement qui est montée dans un canal fileté.

6. Module capteur solaire (4) selon l'une quelconque des revendications 1 à 5, dans lequel chacun des éléments d'ajustage (34, 36) est conçu comme un bloc support monté à la plaque d'accouplement (30, 32) respective.

7. Capteur à auge parabolique (1) ayant une pluralité de modules capteur solaire (4) selon l'une quelconque des revendications 1 à 6, disposés l'un derrière l'autre dans le sens longitudinal, dans lequel des modules capteur solaire (4) adjacents sont reliés l'un à l'autre à l'aide de leurs plaques d'accouplement (30, 32) qui, à chaque fois, sont en regard l'une de l'autre.
